# EUROPEAN PATENT APPLICATION

(11) **EP 1 507 398 A1**
(43) Date of publication of application: **16.02.2005**
(21) Application number: 04017888.1
(22) Date of filing: 28.07.2004
(51) Int. Cl.: H04M 11/06, H04L 12/24, H04L 12/28

(54) **System and method for remote auto configuration of a home gateway**

(30) Priority: 11.08.2003 KR 2003055304
(71) Applicant: Samsung Electronics Co., Ltd., Suwon-si, Gyeonggi-do (KR)
(72) Inventor: Choi, Jung-Chul, Taean-eub, Hwaseong-si, Gyeonggi-do (KR)
(74) Representative: Grünecker, Kinkeldey, Stockmair & Schwanhäusser Anwaltssozietät

(57) **Abstract**

A home gateway remote auto management system and method thereof. The home gateway remote auto management system includes a home device having a modem capable of connecting to a public switched telephone network, a home gateway transmitting an error message corresponding to a connection error with an external access network, to the home device, and a remote management server connecting to the public switched telephone network and transmitting a configuration data to handle an authentication of the home gateway and the connection error. The home device transmits the configuration data to the home gateway.

## Description

### CROSS-REFERENCE TO RELATED APPLICATIONS

This application claims the priority of Korean Patent Application No. 2003-55304, filed August 11, 2003 in the Korean Intellectual Property Office, the disclosure of which is incorporated herein by reference.

### BACKGROUND OF THE INVENTION

### Field of The Invention

The present invention relates to a home gateway of a home network, and more specifically to a home gateway remote auto management system and a method thereof.

### Description of The Related Art

Conventionally, there are two kinds of error occurring when a home gateway is in connection with an access network, that is, an error at initial connection and an error at failure.

The error at the initial connection is solved through a connection of a home gateway initially connected to the Internet. That is, a technician from the distributing company visits to install an xDSL modem and configures a network The error at failure is also solved through a notification of the error from a user to a service provider. Then, the technician visits to examine and repair.

This heavy dependency on the technician as to the overall errors occurring in the home network could be quite inefficient if the home network system is used among the general users.

Hence, importance on the remote management of the home network, that is, on a home gateway has been accentuated and various technologies have been developed for the remote management. According to a remote management technology recently developed, a remote management server is implemented in the Internet, which provides maintenance service for the home gateway in every home.

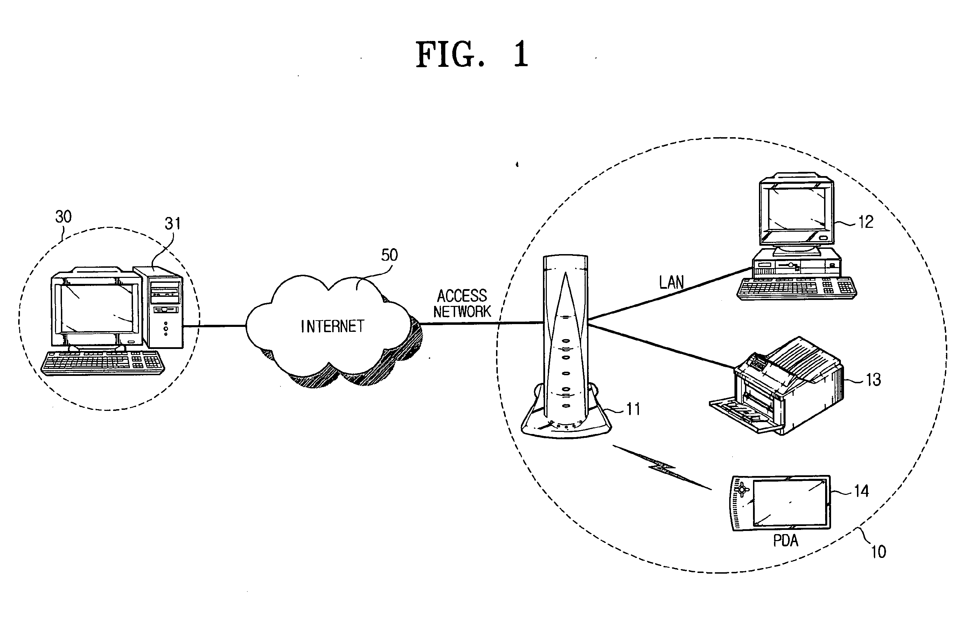

FIG. 1 is a conceptual diagram schematically illustrating a conventional home gateway remote management system.

The home gateway remote management system includes a home gateway 11 in a home network 10, Internet 50 and a service provider 30 having a remote management server 31.

Home devices 12, 13, 14 in the home network 10 are connected to the home gateway 11 and provided with various services by connecting to the service provider 30 through the Internet 50 which is an external access network.

However, the above conventional remote management system has a drawback. That is, though the remote management service is provided when the home gateway 11 is connected to the Internet, the remote management service cannot be provided if the error occurs at the initial connection or the connection with the Internet.

### SUMMARY OF THE INVENTION

To solve the above drawback, an aspect of the present invention is to provide a home gateway remote auto management system for providing a remote auto management at an initial network configuration or failure of a home gateway, and a method thereof.

To accomplish the aspect of the present invention, the home gateway remote auto management system comprises a home device having a modem capable of connecting with a public switched telephone network, a home gateway transmitting an error message corresponding to a connection error with an external access network to the home device, and a remote management server connecting with the public switched telephone network and transmitting a configuration data to handle an authentication of the home gateway and the connection error. The home device transmits the configuration data to the home gateway.

The home gateway comprises an access network unit connecting with the external access network, a determination unit determining whether the connection error with the external access network has occurred, a gateway processing unit transmitting the error message corresponding to the connection error to the home device when the connection error occurs, and an installing unit installing the configuration data transmitted from the home device to the access network unit.

Also, the home gateway further comprises an error message storing unit storing the error message corresponding to the connection error, and a gateway communication unit transmitting the error message to the home device and receiving the configuration data from the home device.

The home device comprises an input/output unit inputting and outputting data from and to the home gateway, a device communication unit connecting to the public switched telephone network through the modem and communicating with the remote management server, and a device processing unit controlling the device communication unit to connect to the public switched telephone network when the error message is input. The device processing unit controls the input/output unit to output the configuration data to the home gateway when the configuration data is transmitted.

The remote management server comprises a server communication unit communicating with the home device via the public switched telephone network, an error message management DB storing the configuration data corresponding to each error message, and a server processing unit detecting a configuration data among the prestored configuration data to solve the error message of the home gateway. The server processing unit transmits the detected configuration data to the home device through the server communication unit

The remote management server further comprises a configuration data processing unit converting the detected configuration data to a data format of the home gateway and transmitting it to the server communication unit, and an authentication unit authenticating by using unique information of the home gateway. The home gateway is an initial connection in process of the authentication, the server processing unit controls the server communication unit to transmit configuration data corresponding to an initial connection error among the prestored configuration data to the home device.

A home gateway remote auto management method comprises the steps of (a) transmitting the error message corresponding to the connection error between the home gateway and the external access network, to the home device, (b) connecting to the remote management server through the public switched telephone network, (c) uploading the connection error to the remote management server, (d) downloading the configuration data to the home device through the public switched telephone network to solve the connection error, and (e) reinstalling the configuration data to the home gateway.

The step (a) comprises the steps of connecting to the external access network, determining whether the connection error has occurred with respect to the external access network, transmitting an error message corresponding to the connection error to the home device when the connection error occurs, and storing the error message corresponding to the connection error.

After the step (b), the home gateway remote auto management method comprising the steps of authenticating by using unique information of the home gateway, determining whether connection of the home gateway is an initial connection or not, in case of the initial connection, downloading an initial configuration data to the home device and reconfiguring the initial configuration data to the home gateway. Before the downloading step, the step of converting the initial configuration data to a data format of the home gateway is included

The step (d) comprises the steps of detecting a configuration data corresponding to the uploaded error message, converting the detected configuration data to the data format of the home gateway, and downloading the converted configuration data to the home device.

The step (e) comprises the steps of transmitting the downloaded configuration data to the home gateway and reconfiguring the external access network of the home gateway by using the configuration data.

Therefore, a home gateway remote auto management service is provided.

### BRIEF DESCRIPTION OF THE DRAWING FIGURES

The above aspects and advantages of the present invention will become more apparent after a reading of the following detailed description when taken in conjunction with the drawing figures, in which:

FIG. 1 is a conceptual diagram illustrating a conventional home gateway remote auto management system;

FIG. 2 is a conceptual diagram illustrating an overall home gateway remote auto management system according to the present invention;

FIG. 3 is a block diagram illustrating in detail the home gateway remote auto management system according to the present invention;

FIGS. 4A through 4C are sequence flow charts illustrating operations of the home gateway remote auto management system of FIG. 3; and

FIGS. 5A and 5B are flow charts illustrating a remote auto management method of the home gateway remote auto management system of FIG. 3.

### DETAILED DESCRIPTION OF THE EXEMPLARY EMBODIMENTS

Hereinafter, the present invention will be described in great detail with reference to the attached drawings.

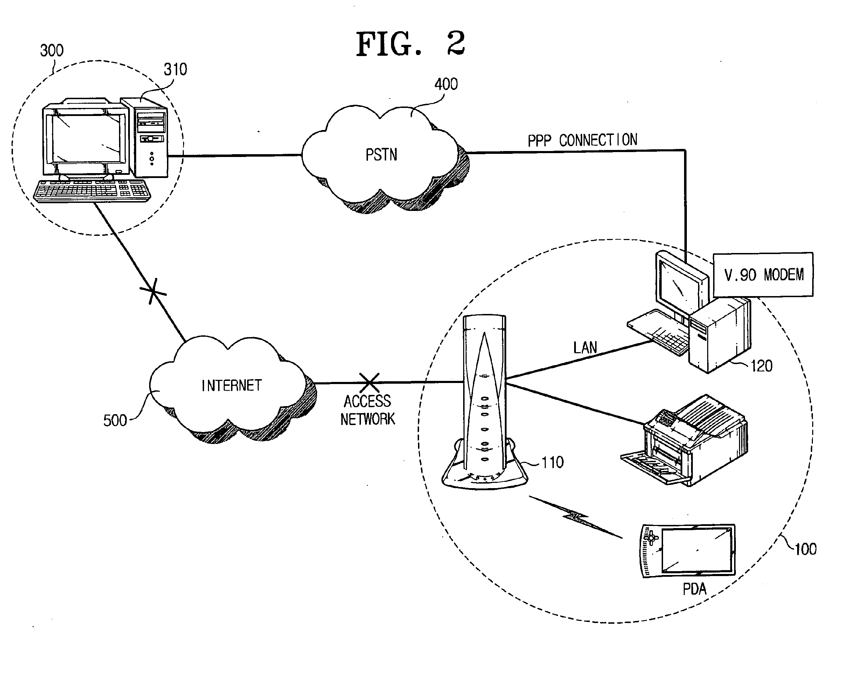

FIG. 2 is a conceptual diagram illustrating an overall operation of a home gateway remote auto management system according to the present invention.

The home gateway remote auto management system comprises a home gateway 110 for connecting a home network 100 to an external access network 500, a personal terminal (hereafter, refer to as "PC") main body 120 which is a home device having a modem using a telephone line (e.g., V. 90 modem), and a service provider 300 having a remote management server 310. The home gateway remote auto management system further comprises a public switched telephone network (PSTN) 400 for connecting the home gateway 110 and the remote management server 310.

Upon being booted, the home gateway 110 determines whether there is an error with respect to a connection status of an access network.

If determining as error, the home gateway 110 transmits an error code corresponding to the connection error to the PC main body 120 through the home network. Based on the received error code, the PC main body 120 requests an error message and transmits the received error message to the remote management server 310.

At this time, the transmission is performed in such a manner that a connection to the PSTN 400 is initiated through the modem of the PC main body 120, and the remote management server 310 authenticates the home gateway 110. That is, the remote management server 310 authenticates a unique ID allotted to the home gateway 110 and determines whether it is the initial connection to the remote management server 310 or not

In case of the initial connection, an initial configuration data is provided to the home gateway 110. If not, the error message is requested from the home gateway 110. The remote management server 310 reads the error message requested from the home gateway 110 and transmits through the PC main body 120, network configuration data for solving the connection error of the home gateway 110.

If the error message is not solved through the remote management, the remote management server 310 accepts the notification of failure of the home gateway 110 and provides appropriate services such as information regarding a technician, who would make a visit.

Accordingly, remote management is possible even when the connection error is in the access network, as the home gateway 110 receives the network configuration data corresponding to the connection error from the remote management server 310 by using the PC main body 120 having the modem.

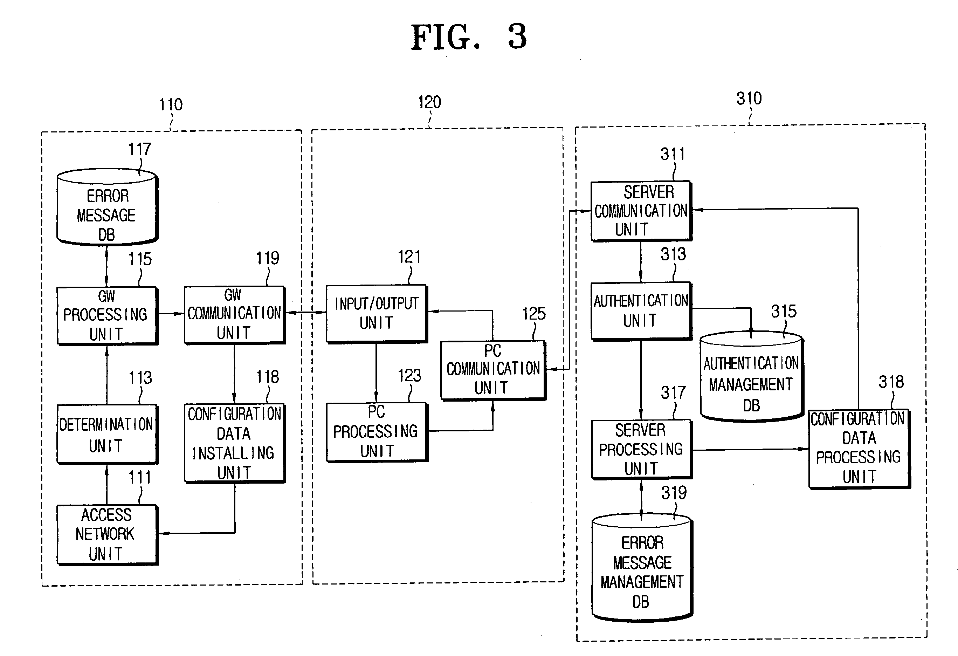

FIG. 3 is a block diagram illustrating in detail the home gateway remote auto management system according to the present invention.

The home gateway 110 comprises an access network unit 111, a determination unit 113, a gateway processing unit 115, an error message DB 117, a gateway communication unit 119 and a configuration data installing unit 118.

The access network unit 111 performs the connection with an external access network such as xDSL, ADSL, VDSL.

The determination unit 113 determines the connection status of the access network unit 111.

The gateway processing unit 115 stores the error message corresponding to the connection status determined by the determination unit 113 into the error message DB 117, and controls the gateway communication unit 119 to transmit the error code corresponding to the error message to the PC main body 120.

The gateway communication unit 119 communicates with PC main body 120 having the modem. The PC main body 120 can communicate with the PSTN through a home network (LAN). In detail, the error message stored in the error message DB 117 is transmitted to the PC main body 120 and the network configuration data downloaded from the remote management server 310 to the PC main body 120 is transmitted to the home gateway 110. The network configuration data downloaded from the remote management server 310 is either initial configuration data or a failure configuration data.

The configuration data installing unit 118 reconfigures the access network unit 111 by using the network configuration data provided from the remote management server 310.

The PC main body 120 includes an input/output unit 121, a PC processing unit 123 and a PC communicating unit 125.

The input/output unit 121 is input with the error message transmitted from the home gateway 110 and outputs the network configuration data downloaded from the remote management server 310, to the home gateway 110.

Upon being input with the error message from the input/output unit 121, the PC processing unit 123 controls the PC communication unit 125 to initialize the connection with the PSTN. Also, the PC processing unit 123 transmits the error message to the remote management server 310 through the PC communication unit 125, and controls the input/output unit 121 to output the configuration data transmitted from the remote management server 310, to the home gateway 110.

The PC communication unit 125 has the modem such as a V. 90 modem so as to communicate with the remote management server 310 through the connection to the PSTN. That is, the PC communication unit 125 transmits the error message input from the input/output 121, to the remote management server 310 and receives the network configuration data from the remote management server 310.

The remote management server 310 comprises a server communication unit 311, an authentication unit 313, an authentication management DB 315, a server processing unit 317, an error message management DB 319 and a configuration data processing unit 318.

The server communication unit 311 connected to the PSTN communicates with the PC main body 120 which is a client

The authentication unit 313 authenticates the home gateway 110 based on a unique ID of the home gateway 110 and authentication data prestored in the authentication management DB 315. At this time, the unique ID of the home gateway 110 determines whether it is the initial connection.

The server processing unit 317 detects the network configuration data capable of solving the received error message, based on data stored in the error message management DB 319.

The error message management DB 319 stores the error message occurring in each home gateway and the network configuration data for solving each error message.

The configuration data processing unit 318 provides the server communication unit 311 with configuration data corresponding to the detected error message. The configuration data is the failure configuration data converted to a data format of the home gateway 110.

The server processing unit 317 determines whether it is the initial connection of the home gateway 110 or not during an authentication procedure of the authentication unit 313. If it is determined to be the initial connection, the server processing unit 317 controls to transmit initial configuration data corresponding to an initial connection error, to the home gateway 110.

The server communication unit 311 downloads the network configuration data provided from the configuration data processing unit 318 to the PC main body 120 through the PSTN. The PC main body 120 transmits the downloaded network configuration data to the home gateway 110. Hence, the configuration data installing unit 118 of the home gateway 110 uses the transmitted network configuration data and reconfigures the access network unit 111.

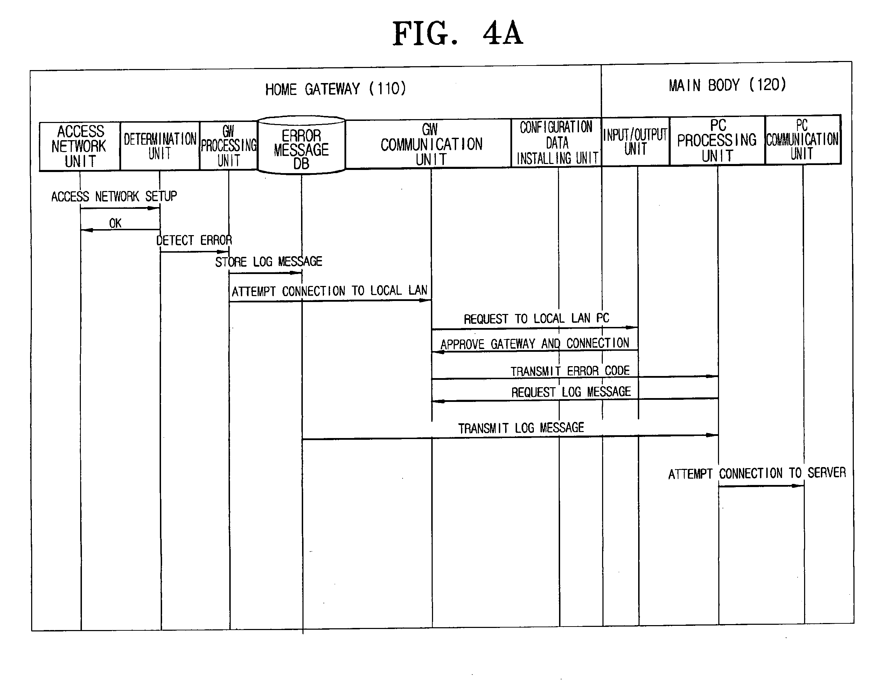

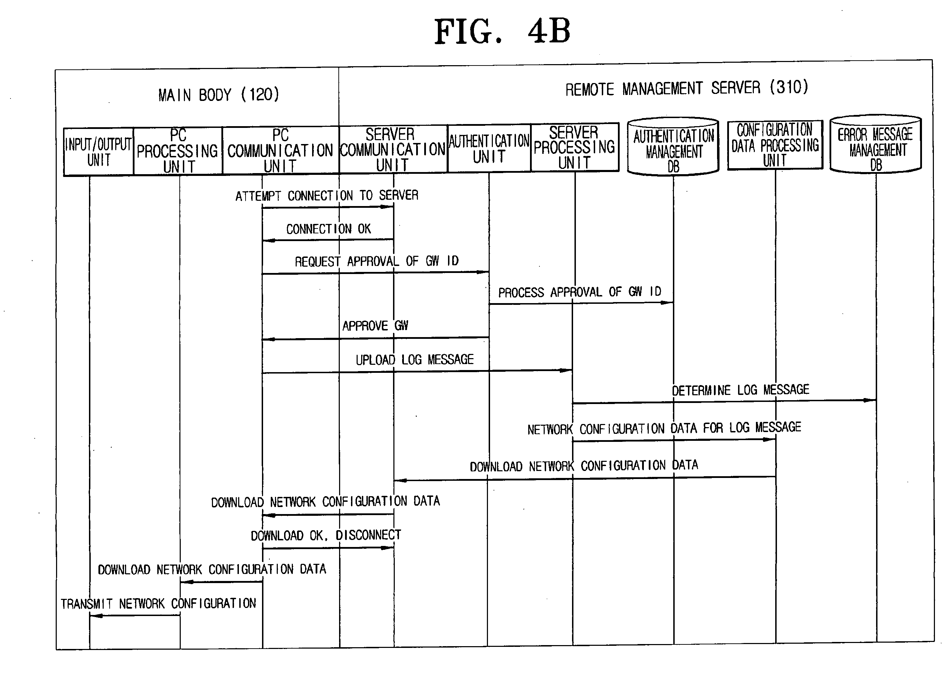

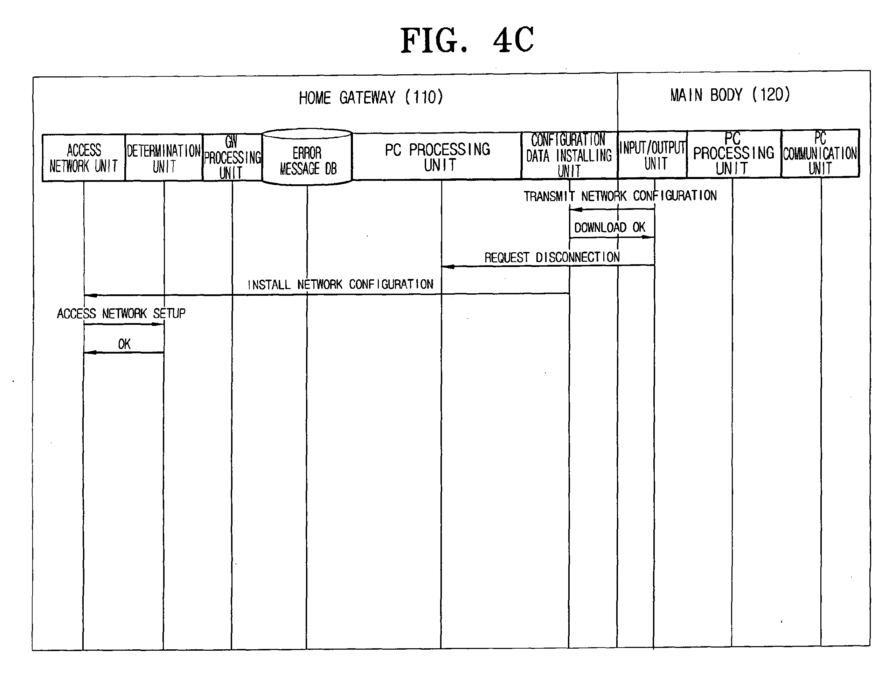

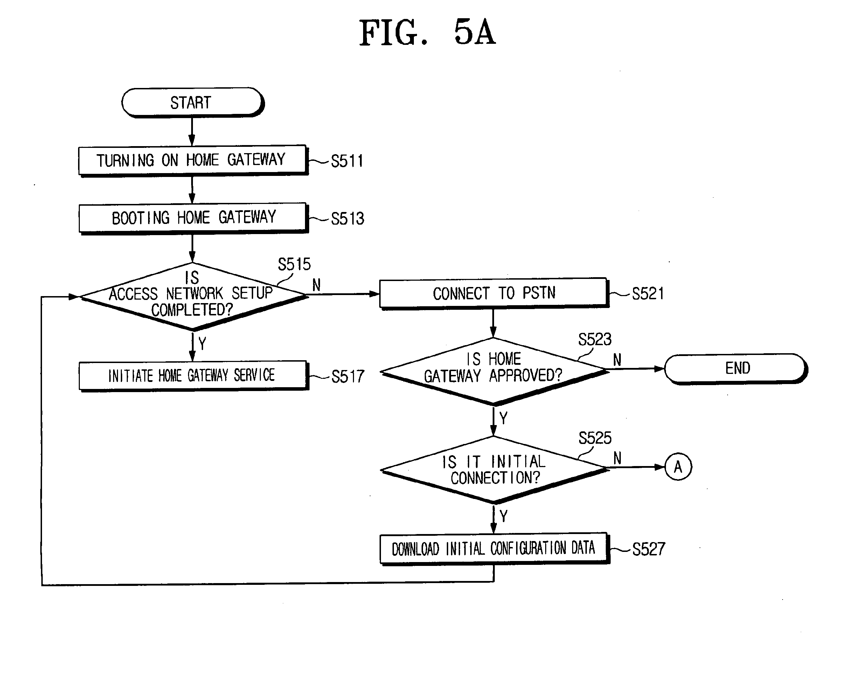

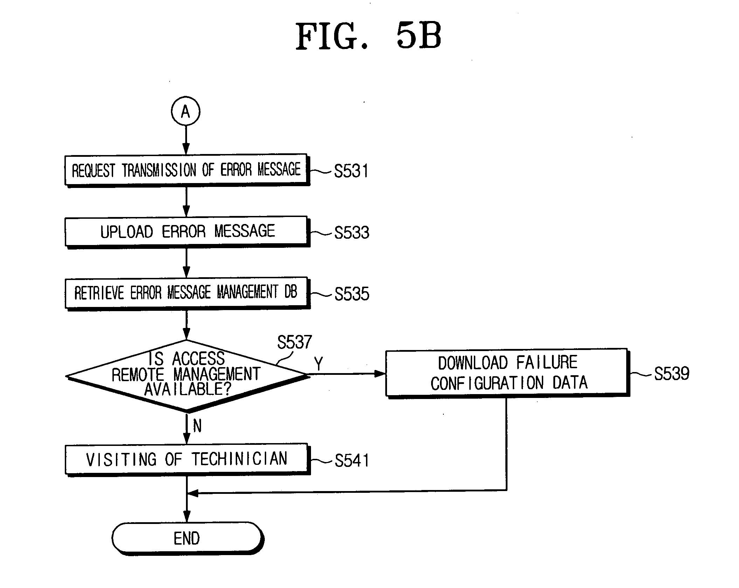

FIGS. 4A through 4C are sequence flow charts illustrating operations of the home gateway remote auto management system according to the present invention. FIGS. 5A and 5B are also flow charts thereof. Hereinafter, a remote auto management method of the home gateway remote auto management system according to the present invention is described in detail.

When a user turns on the home gateway 110 at step S511, the home gateway 110 performs booting at step S513. During the booting, the access network unit 111 performs the connection with the external access network with a preset ID and a password.

The determination unit 113 determines whether the external access network is normally connected with the access network unit 111 at step S515. If so, the home gateway 110 is connected to the external access network and provided with services from the remote management server 310 at step S517.

In case of the error according to the result of detecting the connection status, the gateway processing unit 115 stores the error message corresponding to a current error in the error message DB 117. The gateway communication unit 119 attempts connection to the LAN.

The gateway communication unit 119 requests the LAN connection to the input/output unit 121 of the PC main body 120. The input/output unit 121 approves the communication with the gateway communication unit 119 so that the home gateway 110 intercommunicates with the PC main body 120.

The gateway communication unit 119 transmits a predetermined error code that the connection error has occurred, to the PC processing unit 123 of the PC main body 120. Then, the PC processing unit 123 requests the error message corresponding to the error code from the home gateway, i.e., the gateway communication unit 119.

Corresponding to the request of the error message from the PC processing unit 123, the error message stored in the error message DB 117 is transmitted to the PC processing unit 123 of the PC main body 120 through the home network.

Accordingly, a connection to the PSTN through the modem of the PC communication unit 125, is attempted. The PC communication unit 125 requests a connection to the server communication unit 311 of the remote management server 310. The server communication unit 311 approves the communication with the PC communication unit 125 so that the PC main body 120 is able to intercommunicate with the remote management server 310 at step S521.

The PC communication unit 125 sends a request for authentication of the home gateway 110, to the authentication unit 313 of the remote management server 310. The authentication unit 313 performs the authentication using the unique ID of the home gateway 110, based on authentication management data prestored in the authentication management DB 315 at step S523. During the authentication, it is determined whether the unique ID of the home gateway is the initial connection at step S525.

According to a result of the determination, if the connection of home gateway 110 is an initial connection, the server processing unit 317 detects the initial configuration data among the configuration data prestored in the error message management DB 319 and transmits it to the home gateway 110. That is, the configuration data processing unit 318 converts the initial configuration data to a data format of the home gateway 110 and downloads it to the PC communication unit 125 through the server communication unit 311 at step S527.

Meanwhile, when the connection of home gateway 110 is not an initial connection, referring to flow charts of FIG. 5B, the server processing unit 317 requests the transmission of the error message to the server communication unit 311 at step S531. Accordingly, the PC communication unit 125 uploads the error message to the server communication unit 311, and the uploaded error message is provided to the server processing unit 317 at step S533.

The server processing unit 317 uses the data stored in the error message management DB 319 and detects the configuration data capable of solving the input error message at step S535.

That is, if there is failure configuration data in the error message management DB 319 corresponding to the remotely manageable error message at step S537, the server processing unit 317 transmits the configuration data corresponding to the error message to the configuration data processing unit 318. Also, the configuration data processing unit 318 converts the configuration data to the data format of the home gateway 110 and provides it to the server communication unit 311. Hence, the server communication unit 311 downloads the configuration data to the PC communication unit 125.

The configuration data, downloaded to the PC main body 120, is transmitted to the configuration data installing unit 118 through the input/output unit 121 and the gateway communication unit 119 of the home gateway 110. The configuration data installing unit 118 reinstalls the configuration data in the access network unit 111.

In the mean time, if the failure configuration data corresponding to the remotely manageable error message is not detected at step S537, a message that the remote management service is not available is transmitted to the PC main body 120 so that the user can request the services of a technician at step S541.

As described above, when it is impossible to connect with the remote management server through the external access network due to the connection error occurred between the home gateway and the access network, the network configuration data corresponding to the connection error is provided from the remote management server through the connection to the PSTN.

Hence, the home gateway's remote auto management service is available.

According to the present invention, there is an advantage that the service provider can reduce labor cost for a visiting technician.

It is also advantageous for the user, who can reduce the costs associated with calling the technician to visit. Also, before the user recognizes the failure, the error is automatically detected and solved in the system and therefore, the user can have advantages such as prompt error handling and improved convenience.

While an exemplary embodiment of the present invention has been described, additional variations and modifications in above-discussed exemplary embodiment may occur to those skilled in the art once they learn of the basic inventive concepts. Therefore, it is intended that the appended claims shall be construed to include both the exemplary embodiment and all such variations and modifications as fall within the spirit and scope of the invention.

## Claims

1. A home gateway remote auto management system comprising:
a home device having a modem operable to connect with a public switched telephone network;
a home gateway transmitting an error message corresponding to a connection error with an external access network, to the home device; and
a remote management server connecting with the public switched telephone network and transmitting configuration data to handle an authentication of the home gateway and the connection error,
wherein the home device transmits the configuration data to the home gateway.

2. The system of claim 1, wherein the home gateway comprises:
an access network unit connecting with the external access network;
a determination unit determining whether the connection error with the external access network has occurred;
a gateway processing unit transmitting the error message corresponding to the connection error, to the home device when the connection error occurs; and
an installing unit installing the configuration data transmitted from the home device, to the access network unit.

3. The system of claim 2, further comprising:
an error message storing unit storing the error message corresponding to the connection error; and
a gateway communication unit transmitting the error message to the home device and receiving the configuration data from the home device.

4. The system of claim 1, wherein the home device comprises:
an input/output unit inputting and outputting data from and to the home gateway;
a device communication unit connecting to the public switched telephone network through the modem and communicating with the remote management server; and
a device processing unit controlling the device communication unit to connect to the public switched telephone network when the error message is input,
wherein the device processing unit controls the input/output unit to output the configuration data to the home gateway when the configuration data is transmitted.

5. The system of claim 1, wherein the remote management server comprises:
a server communication unit communicating with the home device via the public switched telephone network;
an error message management DB storing the configuration data corresponding to each error message; and
a server processing unit detecting configuration data among the prestored configuration data to solve the error message of the home gateway,
wherein the server processing unit transmits the detected configuration data to the home device through the server communication unit.

6. The system of claim 5, further comprising a configuration data processing unit converting the detected configuration data to a data format of the home gateway and transmitting it to the server communication unit.

7. The system of claim 5, further comprising an authentication unit authenticating by using unique information of the home gateway, and
wherein if the home gateway reports an initial connection stage in a process of the authentication, the server processing unit controls the server communication unit to transmit configuration data corresponding to an initial connection error among the prestored configuration data to the home device.

8. The system of claim 1, wherein the home device is a personal terminal.

9. A home gateway auto management method comprising:
(a) transmitting an error message corresponding to a connection error between a home gateway and an external access network to a home device;
(b) connecting to a remote management server;
(c) uploading the error message to the remote management server;
(d) downloading configuration data to the home device to solve the connection error; and
(e) reinstalling the configuration data to the home gateway.

10. The method of claim 9 ,wherein the step (a) comprises:
connecting to the external access network;
determining whether the connection error has occurred with respect to the external access network; and
transmitting the error message corresponding to the connection error to the home device when the connection error occurs.

11. The method of claim 10, further comprising storing the error message corresponding to the connection error.

12. The method of claim 9, after the step (b), further comprising:
authenticating by using unique information of the home gateway;
determining whether connection of the home gateway is an initial connection or not;
in case of the initial connection, downloading an initial configuration data to the home device; and
reconfiguring the initial configuration data to the home gateway.

13. The method of claim 12, before the downloading step, further comprising converting the initial configuration data to a data format of the home gateway.

14. The method of claim 9, wherein the step (d) comprises:
detecting configuration data corresponding to the uploaded error message;
converting the detected configuration data to the data format of the home gateway; and
downloading the converted configuration data to the home device.

15. The method of claim 9, wherein the step (e) comprises:
transmitting the downloaded configuration data to the home gateway; and
reconfiguring the external access network of the home gateway using the configuration data.

16. The method of claim 9, wherein the home device is a personal terminal.

17. The method of claim 9, wherein the connection to the remote management server is via a public switched telephone network.
